# EUROPÄISCHE PATENTSCHRIFT

(11) **EP 4 567 362 B1**
(45) Veröffentlichungstag und Bekanntmachung des Hinweises auf die Patenterteilung: **18.02.2026**
(21) Anmeldenummer: 23215268.6
(22) Anmeldetag: 08.12.2023
(51) Int. Cl.: F26B 23/02, B32B 21/02

(54) **TECHNIK ZUR REDUZIERUNG VON SCHADSTOFFEN IN TROCKNUNGSANLAGEN FÜR OSB-STRANDS**
TECHNIQUE FOR REDUCING POLLUTANTS IN DRYING SYSTEMS FOR OSB BEACHES
TECHNIQUE DE RÉDUCTION DE POLLUANTS DANS DES INSTALLATIONS DE SÉCHAGE DE BORDS DE RIVE OSB

(43) Veröffentlichungstag der Anmeldung: 11.06.2025
(73) Patentinhaber: SWISS KRONO Tec AG, 6004 Luzern (CH)
(72) Erfinder: HOFER, Josef, 6020 Emmenbrücke (CH); HASCH, Joachim, 10317 Berlin (DE); KALWA, Norbert, 32805 Horn-Bad Meinberg (DE); SCHWIND, Volker, 10407 Berlin (DE)
(74) Vertreter: Lambacher, Michael

(56) Entgegenhaltungen:
- EP-B1- 0 290 931
- WO-A2-2012/096900
- DE-A1- 4 305 543
- US-A- 5 749 160
- US-A- 5 809 664
- US-A1- 2006 157 183
- US-B2- 11 543 124
- DATABASE WPI Week 2022039, Derwent World Patents Index; AN 2022-41374R, XP002811300

## Beschreibung

### Technisches Gebiet

Die vorliegende Erfindung betrifft das Gebiet der Umwelttechnik. Insbesondere betrifft die vorliegende Erfindung eine Technik zum Reduzieren von Emissionsschadstoffen, die beim Trocknen von OSB-Strands in einer Trocknungsanlage entstehen.

### Hintergrund

Bekannt sind Trocknungsanlagen, die zur Trocknung von feuchtem Gut, insbesondere von Holzspänen oder von OSB-Strands, ausgebildet sind. Derartige Trocknungsanlagen weisen einen Trockner (beispielsweise einen Trommeltrockner) mit einer Trocknungskammer auf, der das zu trocknende Gut kontrolliert zugeführt wird. Ferner wird der Trocknungskammer ein kontrollierter Volumenstrom an heißem Trocknungsgas (beispielsweise Heißluft) zugeführt, der das zu trocknende Gut langsam durch die Trocknungskammer transportiert. Das der Trocknungskammer zugeführte heiße Trocknungsgas umströmt und erwärmt das zu trocknende Gut und nimmt dabei die frei werdende Feuchtigkeit auf. Am Ausgang der Trocknungskammer wird das getrocknete Gut von dem Trocknungsgas wieder getrennt (beispielsweise durch Zyklonabscheider). Das Trocknungsgas am Ausgang der Trocknungskammer ist mit Wasserdampf gesättigt, weist in der Regel Schadstoffe auf, die beim Trocknen des Gutes entstehen, und wird Brüden genannt. Der Brüden kann gereinigt und als Abgas an die Umwelt abgeführt werden.

Um die Effizienz von Trocknungsanlagen zu steigern, ist ferner bekannt, wenigstens einen Teil des am Ausgang der Trocknungskammer austretenden Brüdens in eine dem Eingang der Trocknungskammer vorgelagerte Mischkammer rückzuführen. Der rückgeführte Brüden (auch Rückbrüden genannt) wird dort mit heißem Trocknungsgas gemischt. Das Gasgemisch wird erneut der Trocknungskammer zur Trocknung des feuchten Gutes zugeführt. Durch die Beimischung von Rückbrüden muss weniger heißes Trocknungsgas durch den Brenner bereitgestellt werden. Insbesondere kann die Restwärme des Rückbrüdens genutzt werden, wodurch die Trocknungsanlage insgesamt energieeffizienter betrieben werden kann.

Aus der DE 40 23 518 A1 ist eine Trocknungsanlage bekannt, bei der ein Teil des am Ausgang der Brennkammer austretenden Brüdens über eine Rückgasleitung direkt an die Brennkammer des Brenners rückgeführt wird. Der rückgeführte Brüdenteil (bzw. Rückbrüdenteil) wird hierbei durch einen turmförmigen Kondensationswäscher geleitet, der den Brüdenteil auf unter die Kondensationstemperatur (Taupunkt-Temperatur) abkühlt und dadurch entfeuchtet. Dieser Kondensationsvorgang bewirkt ferner eine Teilreinigung des Brüdens, da im Brüden enthaltene Schadstoffe mit auskondensieren. Somit wird ein auf unter den Taupunkt abgekühlter, zumindest teilweise entfeuchteter und gereinigter Rückbrüdenteil dem Brenner bzw. der Brennkammer wieder zugeführt. Die Verwendung eines Kondensationswäschers ist jedoch kostspielig; ferner geht ein nicht zu vernachlässigender Teil der Kondensationswärme im Kondensationswäscher verloren oder kann nur mit technisch großem Aufwand zurückgewonnen werden.

Aus der EP 2 230 477 A1 ist ferner eine Holzspantrocknungsanlage zum Trocknen von Holzspänen bekannt, die eine Rückführvorrichtung zum Rückführen von Brüden in den Trocknungskreislauf aufweist. Die Rückführvorrichtung weist einen Brüdenerhitzer auf, der einen regenerativen und/oder katalytischen Wärmetauscher aufweist und dazu ausgebildet ist, den Brüden auf eine relativ hohe Temperatur im Bereich von 720°C bis 900°C zu erwärmen, so dass im Brüden mitgeführte organische Substanzen oder Feststoffpartikel zum überwiegenden Teil oxidieren (verbrennen). Ein Teil des thermisch regenerativ behandelten Brüdens wird dann als Verbrennungsluft dem Brenner zugeführt. Ein anderer Teil des thermisch regenerativ behandelten Brüdens kann einer Mischkammer, die zwischen dem Brenner und der Trocknungskammer angeordnet ist, zugeführt werden. Die Verwendung eines katalytischen Wärmetauschers ist aufwendig und kostenintensiv.

Ferner ist aus der US 5,983,521 A eine Trocknungsanlage bekannt, bei der der am Ausgang der Trocknungskammer bereitgestellte Brüden vollständig in den Trocknungskreislauf rückgeführt wird. Hierbei wird der Brüden bzw. Rückbrüden in zwei Teilströme aufgeteilt, die dann in unterschiedliche Bereiche der Brennkammer rückgeführt werden. Die beiden Rückbrüden-Teilströme durchlaufen jeweils einen Wärmetauscher, in dem Wärme von einem aus der Brennkammer abgeleiteten Gasstrom auf die jeweiligen Rückbrüden-Teilströme übertragen wird. Einer der beiden Wärmetauscher, der primär mit Wärme aus dem Brenner versorgt wird, ist ein sogenannter Hochtemperaturwärmetauscher, während der andere ein sogenannter Niedrigtemperaturwärmetauscher ist. Über die Temperaturen der beiden Rückbrüdenteilströme wird jedoch keine Aussage getroffen. Auch dieser Ansatz der Rückführung von Brüden ist technisch aufwendig, da zwei Wärmetauscher und entsprechende Rückführleitungen für die beiden Teilströme vorgesehen werden müssen. Ferner geht dieser Ansatz mit einer komplexen Regelung der beiden Rückbrüdenteilströme einher.

Ferner ist aus der WO 01/59381 A1 eine Trocknungsanlage bekannt, bei der ein Teil des Brüdens sowohl in die Brennkammer als auch in eine Mischkammer zwischen der Brennkammer und der Trocknungskammer rückgeführt wird. Hierfür wird die Rückführleitung in zwei Teilleitungen aufgeteilt, wobei eine Teilleitung zur Brennkammer und die andere Teilleitung zur Mischkammer führt. Ein Ventilator zur Steuerung des Rückbrüdenstroms ist im gemeinsamen Teil der Rückführleitung, also vor den beiden Teilleitungen, angeordnet. Dadurch wird es allerdings schwierig, den zur Brennkammer führenden Rückbrüdenstrom zu steuern. Ferner kommt in der in der WO 01/59381 A1 beschriebenen Trocknungsanlage ein Bandtrockner zum Einsatz. Derartige Trockner sind dafür bekannt, dass sie einerseits bei relativ niedrigen Temperaturen arbeiten (< 100°C), andererseits jedoch hohe Trocknungsgasströme benötigen (ungefähr dreifacher Trocknungsgasstrom im Vergleich zu Trommeltrocknern). Da die Arbeitstemperatur der Trocknungsanlage moderat ist, ist auch die Temperatur des Rückbrüdenstroms moderat; dadurch besteht die Gefahr, dass im Rückbrüdenstrom enthaltene Feuchtigkeit an der Brennkammerwand auskondensiert und somit den Brenner beeinträchtigt.

Ferner ist aus der US 5 809 664 A eine Trocknungsanlage für feuchtes organisches Material, wie beispielsweise Tiermist oder Tiergülle, bekannt. Trocknungsluft aus einer Verbrennungskammer wird an einer Unterseite einer konisch zulaufenden Trocknungskammer zum Trocknen des feuchten Materials zugeführt. Die beim Trocknen freigesetzte dampfhaltige Trocknungsluft verlässt oberseitig die konische Trocknungskammer und wird nach Passieren eines Zyklons zum Trennen der Trocknungsluft von Partikeln an einen der Verbrennungskammer vorgeschalteten Wärmetauscher zurückgeführt. Im Wärmetauscher wird die rückgeführte Trocknungsluft erhitzt, bevor sie in die Verbrennungskammer gelangt.

Ferner ist aus der US 5 749 160 A ein Bandtrockner zur Trocknung von Holzchips bekannt, der drei Trocknungszonen mit individuell einstellbaren Trocknungstemperaturen aufweist. Ein Teil der Trocknungsluft aus der ersten oder zweiten Trocknungszone kann abgezweigt und einer Brennkammer zur Verbrennung von VOCs zugeführt werden.

Ferner ist aus der EP 0 290 931 B1 eine Trocknungsanlage zur Trocknung von Holzspänen bekannt, die eine Filtervorrichtung aufweist, welche wenigstens einen Teil der Trocknungsabgase bei einer oberhalb ihres Taupunktes liegenden Temperatur reinigt.

Ferner ist aus der US 11543 124 B2 eine Trocknungsanlage zum Trocknen von Holzspännen bekannt, die mehrere Wärmetauscher aufweist, in welche der rückgeführte Brüdenstrom einmündet und erwärmt wird, bevor dieser erneut dem Trockner zugeführt wird.

Obwohl, wie oben beschrieben, eine Vielzahl von Trocknungsanlagen bekannt ist, die Rückführvorrichtungen zum Rückführen und Wiederverwerten von Brüden aufweisen, um einerseits die Effizienz derartiger Anlagen zu steigern und andererseits die Schadstoffemissionen zu verringern, besteht weiterer Verbesserungsbedarf.

Insbesondere ist es Aufgabe der vorliegenden Erfindung, eine Technik bereitzustellen, welche die Schadstoffemission von Trocknungsanlagen, insbesondere von Trocknungsanlagen für OSB-Strands, weiter reduziert, und andererseits kostengünstig und einfach ausgestaltet ist. Ferner soll die bereitgestellte Technik leicht in bereits vorhandenen OSB-Strand-Trocknungsanlagen nachrüstbar sein.

### Kurzer Abriss

Zur Lösung der obengenannten Aufgabe wird gemäß einem ersten Aspekt der Erfindung eine Trocknungsanlage zum Trocknen von OSB-Strands bereitgestellt. Die Trocknungsanlage umfasst einen Trockner mit einer Trocknungskammer, die dazu ausgebildet ist, OSB-Strands unter Einleitung von heißem Trocknungsgas in die Trocknungskammer zu trocknen; einen Brenner mit einer Brennkammer zur Bereitstellung von heißem Trocknungsgas; und eine Vorrichtung umfassend eine Rückführleitung, die thermisch isoliert ist und mit ihrem ersten Ende mit dem Ausgang der Trocknungskammer oder mit einer Brüden-Ableitung und mit ihrem zweiten Ende mit dem Brenner gekoppelt ist, und die dazu ausgebildet ist, wenigstens einen Teil des aus der Trocknungskammer austretenden Brüdens direkt zu dem Brenner rückzuführen, um die im Brüdenteil enthaltenen Schadstoffe im Brenner zu verbrennen. Die Vorrichtung (im Folgenden auch Rückführvorrichtung genannt) ist ferner dazu ausgebildet, die Temperatur des zum Brenner rückzuführenden Brüdenteils auf einer Temperatur über der Kondensationstemperatur des im Brüdenteil mitgeführten Wasserdampfes zu halten.

Als OSB-Strands werden lange, schlanke Späne bezeichnet, die aus entrindetem Rundholz gewonnen werden und die zur Herstellung von OSB (in Englisch: Oriented Strand Board) verwendet werden. OSB-Strands unterscheiden sich von herkömmlichen Holzspänen in ihrer Dimensionierung. Sie können Längen im Bereich von 100-200 mm, Breiten im Bereich von 10-50 mm und Dicken im Bereich von 0,5-1 mm aufweisen. Zur Herstellung von OSB werden OSB-Strands nach dem Trocknen in der Trocknungsanlage beleimt, in mehreren Schichten orientiert angeordnet (beispielsweise mittels Wurfverfahren), und anschließend verpresst.

Als Brüden wird das mit Wasserdampf gesättigte Trocknungsabgas bezeichnet, das beim Trocknen der feuchten OSB-Strands entsteht und am Ausgang der Trocknungsanlage (genauer gesagt am Ausgang der Trocknungskammer) austritt. Der zum Brenner rückgeführte Brüden bzw. Brüdenteil wird nachfolgend auch als Rückbrüden bzw. Rückbrüdenteil bezeichnet.

Der beim Trocknen von OSB-Strands frei werdende Brüden bzw. Rückbrüden kann mit Schadstoffen verunreinigt sein. Diese Schadstoffe können vor allem flüchtige organische Verbindungen (sogenannte VOCs - Volatile Organic Compounds) und/oder Feststoffpartikel umfassen, die die Umwelt belasten. Ein Beispiel für flüchtige organische Verbindungen sind Terpene ((C₅H₈)n mit n ≥ 2), die beim Trocknen von OSB-Strands freigesetzt werden können. Diese Schadstoffe können aber auch andere Verbindungen, wie beispielsweise stickstoffbasierte Verbindungen (z.B. Lachgas N₂O, Ammoniak NH₃, NOₓ) umfassen, die die Umwelt stark belasten.

Der Brenner der Trocknungsanlage kann dazu ausgebildet sein, eine Brennerflamme in der Brennkammer zu erzeugen, die eine Flammentemperatur im Temperaturbereich von 600 °C bis 1200 °C, bevorzugt im Temperaturbereich von 600 °C bis 800 °C aufweist. Als Brenner kann beispielsweise ein Gas-, Öl-, Feststoff- (beispielsweise ein Holzstaubbrenner) oder ein Mehrstoffbrenner zum Einsatz kommen, der dazu ausgebildet ist, eine Flammentemperatur im oben genannten Temperaturbereich zu erzeugen. Mit Hilfe der Brennerflamme kann ein der Brennkammer zugeführtes Trocknungsgas bzw. ein kontinuierlich zugeführter Volumenstrom an Trocknungsgas auf eine gewünschte Temperatur im Temperaturbereich von 600 °C bis 1200 °C, bevorzugt im Temperaturbereich von 600 °C bis 800 °C erhitzt werden. Als Trocknungsgas kann beispielsweise Trocknungsluft zum Einsatz kommen. Hierbei kann Umgebungsluft der Brennkammer (kontinuierlich) zugeführt werden, die dort mit Hilfe der Brennerflamme auf die gewünschte Temperatur erhitzt wird.

Zusätzlich kann mit Hilfe der Brennerflamme der zum Brenner rückgeführte Brüden auf die gewünschte Temperatur erhitzt und gleichzeitig gereinigt werden. Es hat sich gezeigt, dass die bei der Trocknung von OSB-Strands frei werdenden und im Brüden enthaltenen Schadstoffe (v.a. VOCs, Lachgas, Ammoniak, Staubpartikel) bei Brenner- bzw. Flammentemperaturen im Bereich von 600 °C bis 1200 °C effektiv verbrannt (oxidiert) werden können. Das erhitzte/heiße Trocknungsgas kann zusammen mit dem im Brenner erhitzten und gereinigten Rückbrüden dem Trockner oder einer zwischen dem Brenner und dem Trockner angeordneten Mischkammer (erneut) bereitgestellt werden.

Somit wird durch die erfindungsgemäße Trocknungsanlage mit Brüdenrückführung zum Brenner nicht nur ein Teil des Brüdens recycelt und für einen nachfolgenden Trocknungsprozess wieder zur Verfügung gestellt, sondern auch die im Brüden mitgeführten Schadstoffe in der Brennerflamme verbrannt. Dadurch kann die Schadstoffemission der Trocknungsanlage auf konstruktionstechnisch einfache Weise reduziert werden. Zusätzliche Reinigungsvorrichtungen zur Reinigung des rückgeführten Brüdens, wie sie aus dem Stand der Technik bekannt sind, werden bei der erfindungsgemäßen Anlage nicht benötigt.

Der Trockner kann als Trommeltrockner ausgebildet sein, der eine rotierende Trommel als Trocknungskammer aufweist. Die Trocknungskammer (Trommel) kann dazu ausgebildet sein, die an der Eingangsseite der Kammer kontinuierlich zugeführten OSB-Strands zur gegenüberliegenden Ausgangsseite der Trocknungskammer zu befördern; die sich zur Ausgangsseite hin bewegenden OSB-Strands werden hierbei dem/der in der Trocknungskammer eingeleiteten heißen Trocknungsgas/Trocknungsluft ausgesetzt und dadurch getrocknet. Das an der Eingangsseite der Trocknungskammer kontinuierlich eingeleitete heiße Trocknungsgas durchströmt die Trocknungskammer, nimmt die von den OSB-Strands in der Trocknungskammer abgegebene Feuchtigkeit auf und verlässt die Kammer am Ausgang als Brüden. Die Temperatur des heißen Trocknungsgas kann von der Beschaffenheit der OSB-Strands abhängen und entsprechend eingestellt werden. Bevorzugt wird der Trockner mit Trocknungsgas mit einer Temperatur im Temperaturbereich von 230 °C bis 500 °C, noch bevorzugter in einem Temperaturbereich von 250 °C bis 400 °C betrieben. Der Volumenstrom des der Trocknungskammer zugeführten heißen Trocknungsgases kann in Abhängigkeit von der Menge der zugeführten OSB-Strands entsprechend eingestellt werden.

Zur Rückführung des wenigstens einen Brüdenteils zum Brenner kann die Rückführleitung mit ihrem zweiten Ende mit der Brennkammer und/oder der Muffel des Brenners gekoppelt sein.

Ist die Rückführleitung sowohl mit der Brennkammer als auch mit der Muffel des Brenners gekoppelt, so kann sich die eine Rückführleitung an ihrem zweiten Ende in zwei Teilleitungen aufteilen. Eine erste Teilleitung kann direkt zur Brennkammer führen; eine zweite Teilleitung kann (direkt) zu der Muffel des Brenners führen. Über die erste Teilleitung kann ein erster Teil des zum Brenner rückgeführten Brüdenteils als Verbrennungsluft oder Hauptluft der Brennkammer (der Hochtemperaturzone der Brennkammer) zugeführt werden. Über die zweite Teilleitung kann ein zweiter Teil des zum Brenner rückgeführten Brüdenteils als Kühlluft der Brennermuffel zugeführt werden. Nach der Kühlung der Brennermuffel kann der zweite Teil in die Hochtemperaturzone der Brennkammer gelangen und dort weiter erhitzt und gereinigt werden. Somit werden beide Rückbrüdenteile in der Brennkammer stark erhitzt und die mitgeführten Schadstoffe verbrannt. Der so gereinigte Brüdenteil kann für eine erneute Trocknung der Trocknungskammer bereitgestellt werden.

Alternativ kann die Rückführleitung zwei Rückführleitungen umfassen, wobei eine erste Rückführleitung mit der Brennkammer des Brenners und die zweite Rückführleitung mit der Brennermuffel gekoppelt ist. Über die erste Rückführleitung kann ein erster Rückbrüdenteil (als Verbrennungsluft) zur Brennkammer rückgeführt werden. Über die zweite Rückführleitung kann ein zweiter Rückbrüdenteil (als Kühlluft) zur Brennermuffel rückgeführt werden.

Der die Trocknungskammer verlassende Brüden weist eine Temperatur auf, die oberhalb der Kondensationstemperatur (Taupunkttemperatur) des im Brüden mitgeführten Wasserdampfes ist. Bevorzugt wird die Temperatur des zum Brenner rückgeführten Brüdenteils während des Rückführens jederzeit über der Kondensationstemperatur (Taupunkttemperatur) gehalten. Mit anderen Worten ist die Rückführvorrichtung dazu ausgebildet, die Temperatur des rückgeführten Brüdenteils während des Rückführvorgangs auf einer Temperatur über der Kondensationstemperatur (Taupunkttemperatur) zu halten. Dies wird erreicht, indem die Rückführleitung thermisch isoliert ist. Die thermische Isolierung der Rückführleitung kann dazu beitragen, dass der in der Rückführleitung geleitete Rückbrüdenteil wenig Wärme verliert und somit über der Kondensationstemperatur gehalten werden kann.

Zusätzlich hierzu kann die Rückführvorrichtung ferner mit einer (externen) Vorwärmeinrichtung gekoppelt sein. Die Vorwärmeinrichtung kann dazu vorgesehen sein, die Rückführleitung bedarfsweise vorzuwärmen. Dies kann beispielsweise dann notwendig sein, wenn die Trocknungsanlage angefahren wird und die Rückführleitung (trotz thermischer Isolierung) aufgrund tiefer Umgebungstemperaturen "ausgekühlt" ist. Um ein Absinken der Temperatur des zum Brenner rückgeführten Brüdenteils unter die Kondensationstemperatur zu verhindern, kann die Vorwärmeinrichtung aktiviert werden, um die Rückführleitung auf eine gewünschte Temperatur (Vorwärmtemperatur) vorzuwärmen. Die Vorwärmtemperatur kann hierbei kleiner oder gleich der Temperatur des Rückbrüdens sein.

Die Vorwärmeinrichtung umfasst eine Vorwärmgasquelle, die wahlweise mit der Rückführleitung der Rückführeinrichtung koppelbar ist, um Vorwärmgas im Temperaturbereich von 70 °C bis 110 °C, vorzugsweise im Temperaturbereich von 80 °C bis 100 °C, in die Rückführleitung einzuleiten. Durch das durch die Rückführleitung strömende Vorwärmgas kann die Rückführleitung auf die gewünschte Vorwärmtemperatur gebracht werden. Als Vorwärmgas kann insbesondere entfeuchtete Vorwärmluft zum Einsatz kommen.

Dadurch, dass die Temperatur des Rückbrüdenteils jederzeit über der Kondensationstemperatur gehalten wird, wird verhindert, dass der im Rückbrüdenteil enthaltene Wasserdampf in der für das Rückführen bereitgestellten Rückführleitung, an den Brennkammerwänden oder Brennermuffel teilweise kondensiert. Dadurch wird einerseits verhindert, dass wertvolle Kondensationswärme während des Rückführens verloren geht; andererseits wird auch verhindert, dass Feuchtigkeit in der Rückführleitung oder an den Brennkammerwänden kondensiert, was langfristig zur Schädigung des Brenners führen kann.

Die Rückführvorrichtung kann ferner eine Steuereinrichtung zur Steuerung des Volumenstroms des rückzuführenden Brüdenteils umfassen. Die Steuereinrichtung kann hierfür wenigstens einen Förderventilator umfassen, der in der Rückführleitung angeordnet ist. Der wenigstens eine Förderventilator kann dazu ausgebildet sein, den Rückbrüdenteil in Richtung des Brenners zu bewegen. Über den wenigstens einen Förderventilator kann somit der Volumenstrom des in der Rückführleitung strömenden Rückbrüdenteils (aktiv) eingestellt bzw. gesteuert werden. Der Rückbrüdenvolumenstrom kann in Abhängigkeit von der Brennerleistung bzw. in Abhängigkeit von dem in der Trocknungskammer benötigten Trocknungsgas-Volumenstrom eingestellt werden. Weist die Rückführvorrichtung zwei Teilleitungen oder wenigstens zwei Rückführleitungen zur Rückführung eines ersten Brüdenteils zur Brennkammer und eines zweiten Brüdenteils zur Brennermuffel auf, so kann wenigstens ein Förderventilator in jeder der wenigstens zwei Rückführleitungen oder Teilleitungen vorgesehen sein, um die Volumenströme des ersten und zweiten Brüdenteils aktiv einzustellen.

Ferner kann die Steuereinrichtung eine in der Rückführleitung angeordnete Ventileinheit umfassen. Über die Ventileinheit kann der Volumenstrom des rückzuführenden Brüdenteils, welcher der Brennkammer und/oder der Muffel des Brenners zuzuführen ist, weiter geregelt werden.

Die Trocknungsanlage kann ferner eine zwischen dem Brenner und dem Trockner angeordnete Mischkammer aufweisen. Diese kann dazu ausgebildet sein, vom Brenner bereitgestelltes heißes Trocknungsgas mit einem zur Mischkammer rückgeführten Brüdenteil und/oder mit einem externen Trocknungsgas zu mischen und anschließend der Trocknungskammer zuzuführen. Durch die Beimischung von Brüden und/oder externem Trocknungsgas zum vom Brenner bereitgestellten Trocknungsgas kann das resultierende Trocknungsgasgemisch auf eine auf den Betrieb des Trockners abgestimmte Temperatur gebracht werden, die wesentlich niedriger sein kann als die Temperatur des vom Brenner bereitgestellten Trocknungsgases. Bevorzugt weist das dem Trockner durch die Mischkammer bereitgestellte Trocknungsgas (Trocknungsgasgemisch) eine Temperatur im Bereich von 230 °C bis 500 °C, noch bevorzugter eine Temperatur im Bereich von 250 °C bis 400 °C auf. Der Volumenstrom des durch die Mischkammer der Trocknungskammer zugeführten heißen Trocknungsgases kann in Abhängigkeit von der Menge der zugeführten OSB-Strands entsprechend eingestellt werden.

Zur Rückführung wenigstens eines Brüdenteils in die Mischkammer kann die Rückführvorrichtung ferner mit der Mischkammer gekoppelt sein. Gemäß einer Variante kann die Rückführleitung an ihrem zweiten Ende zusätzlich mit der Mischkammer gekoppelt sein. Dies kann erreicht werden, indem sich die Rückführleitung an ihrem zweiten Ende in wenigstens zwei Teilleitungen aufteilt, wobei eine erste Teilleitung zum Brenner und eine zweite Teilleitung zur Mischkammer führt. Gemäß einer Variante kann die Rückführleitung an ihrem zweiten Ende wenigstens drei Teilleitungen aufweisen, wobei eine erste Teilleitung zur Brennkammer, eine zweite Teilleitung zur Brennermuffel und eine dritte Teilleitung zur Mischkammer führt. Der Volumenstrom in der Rückführleitung und insbesondere der Volumenstromanteil einer jeden Teilleitung kann über den wenigstens einen Förderventilator und/oder der Ventileinheit der oben beschriebenen Steuereinrichtung aktiv gesteuert werden.

Die Trocknungsanlage kann ferner eine Trenneinrichtung umfassen, die am Ausgang der Trocknungskammer angeordnet ist und dazu ausgebildet ist, OSB-Strands von dem Brüden zu trennen. Beispielsweise kann die Trenneinrichtung ein oder mehrere Zyklonabscheider umfassen, die zur Abscheidung von OSB-Strands ausgebildet sind.

Die Trocknungsanlage kann ferner eine Filtereinrichtung umfassen, die dazu ausgelegt ist, Schadstoffe aus jenem Brüdenteil herauszufiltern, der an die Umwelt abgegeben wird und somit nicht über die oben genannte Vorrichtung zum Brenner rückgeführt und dem Trocknungsprozess erneut zur Verfügung gestellt wird.

Gemäß einem zweiten Aspekt der Erfindung wird eine Anlage zur Herstellung von OSB bereitgestellt, wobei die Anlage umfasst: eine Vorrichtung zur Herstellung von OSB-Strands; die Trocknungsanlage gemäß dem ersten Aspekt der Erfindung zur Trocknung der OSB-Strands; eine Vorrichtung zur Beleimung der getrockneten OSB-Strands; eine Vorrichtung zur orientierten Schichtung der beleimten OSB-Strands in mehrere Lagen; und eine Pressvorrichtung zur Verpressung der Lagen zu einem OSB (Oriented Strand Board).

Gemäß einem dritten Aspekt der Erfindung wird ein Verfahren zum Reduzieren von Schadstoffen bereitgestellt, die beim Trocknen von OSB-Strands in einer OSB-Strand-Trocknungsanlage entstehen. Das Verfahren umfasst hierbei folgende Schritte: Rückführen wenigstens eines Teils des beim Trocknen von OSB-Strands entstehenden Brüdens zu dem Brenner der Trocknungsanlage, wobei der wenigstens eine Teil des Brüdens über die Rückführleitung der Trocknungsanlage direkt zum Brenner rückgeführt wird; Halten des zum Brenner rückzuführenden Brüdenteils auf einer Temperatur über der Kondensationstemperatur des im Brüdenteil enthaltenen Wasserdampfs; und Verbrennen der im rückgeführten Brüdenteil enthaltenen Schadstoffe im Brenner.

Bevorzugt wird die Temperatur des rückgeführten Brüdenteils während des Rückführens jederzeit über der Kondensationstemperatur (Taupunkttemperatur) gehalten. Mit anderen Worten wird das erfindungsgemäße Verfahren derart betrieben, dass die Temperatur des Rückbrüdenteils während des gesamten Rückführvorgangs die Kondensationstemperatur nicht unterschreitet. Beispielsweise wird das Verfahren derart betrieben, dass die Temperatur des rückzuführenden Brüdenteils (Rückbrüdenteils) auf mindestens 100 °C gehalten wird. Bevorzugt wird die Temperatur des Rückbrüdenteils in einem Temperaturbereich von 105 °C bis 135 °C, noch bevorzugter in einem Temperaturbereich von 115 °C bis 135 °C gehalten.

In einer besonders einfachen Implementierung des Verfahrens kann der Rückbrüdenteil auf einer Temperatur gehalten werden, die höher als die Kondensationstemperatur ist, jedoch nicht höher als die Temperatur ist, die der Brüden beim Verlassen der Trocknungskammer der Trocknungsanlage aufweist. Typische Temperaturen des die Trocknungskammer verlassenden Brüdens liegen im Temperaturbereich von 115 °C bis 135 °C; entsprechend kann der rückzuführende Brüdenteil auf einer Temperatur im Temperaturbereich von 115 °C bis 135 °C (beispielsweise 125 °C) oder auf etwas geringeren Temperaturen gehalten werden. Dadurch wird das Verfahren besonders einfach realisiert, da keine zusätzlichen Wärmetauscher und/oder Heizeinrichtungen zur Temperaturerhöhung des Rückbrüdens benötigt werden.

Dadurch, dass die Temperatur des Rückbrüdenteils jederzeit über der Kondensationstemperatur gehalten wird, wird verhindert, dass der im Rückbrüdenteil enthaltene Wasserdampf in der für das Rückführen bereitgestellten Rückführleitung oder im Brenner teilweise kondensiert. Dadurch wird einerseits verhindert, dass wertvolle Kondensationswärme während des Rückführens verloren geht; andererseits wird auch verhindert, dass Feuchtigkeit in der Rückführleitung oder an den Brennkammerwänden kondensiert, was langfristig zur Schädigung des Brenners führen kann.

Um den Rückbrüden jederzeit über der Kondensationstemperatur des Wasserdampfes zu halten, kann die zur Rückführung des Brüdens vorgesehene Rückführleitung oder wenigstens ein Teil der hierfür vorgesehenen Rückführleitung bedarfsweise vorgewärmt werden. Dieser Vorwärmschritt ist optional und erfolgt bedarfsabhängig, beispielsweise beim Anfahren der Trocknungsanlage, wenn die Rückführleitung aufgrund kalter Außentemperaturen "ausgekühlt" ist und die Gefahr besteht, dass der Rückbrüdenteil beim Rückführen zum Brenner unter die Kondensationstemperatur fällt.

Für das Vorwärmen kann beispielsweise ein Vorwärmgas (beispielsweise entfeuchtete Vorwärmluft) in die Rückführleitung mit eingeleitet oder vor dem Rückführen des Brüdenteils eingeleitet werden. Das Vorwärmgas kann hierbei eine Temperatur aufweisen, die kleiner oder gleich der Temperatur des Rückbrüdens ist. Bevorzugt kann das Vorwärmgas eine Temperatur im Bereich von 70 °C bis 110 °C, noch bevorzugter im Bereich von 80 °C bis 100 °C aufweisen. Dadurch kann die Rückführleitung auf eine gewünschte Vorwärmtemperatur gebracht werden. Dadurch wird ermöglicht, dass der Rückbrüden bzw. Rückbrüdenteil über den gesamten Rückführweg eine vorgegebene Haltetemperatur über der Kondensationstemperatur aufweist.

Der Schritt des Rückführens kann ein Rückführen eines ersten Brüdenteils zum Brenner und eines zweiten Brüdenteils zu einer Mischkammer umfassen. Der zur Mischkammer rückgeführte Brüdenteil kann dort mit vom Brenner bereitgestelltem/r Trocknungsgas/Trocknungsluft vermischt werden und dem Trockner anschließend bereitgestellt werden.

Der zum Brenner rückgeführte Brüdenteil kann direkt zur Brennkammer rückgeführt werden. In einer alternativen Variante kann der zum Brenner rückgeführte Brüdenteil zunächst der Brennermuffel zur Kühlung zugeführt und anschließend in die Brennkammer geleitet werden. In einer weiteren alternativen Variante kann ein Teil des zum Brenner rückgeführten Brüdenteils direkt der Brennkammer (als Verbrennungsluft) und ein weiterer Teil (der verbleibende Teil) des zum Brenner rückgeführten Brüdenteils der Brennermuffel zugeführt werden. In allen Varianten wird der zum Brenner rückgeführte Brüdenteil durch die Hochtemperaturzone der Brennkammer geführt, wodurch der Brüden auf Temperaturen im Bereich von 600 °C bis 1200 °C, bevorzugt auf Temperaturen im Bereich von 600 °C bis 800 °C erhitzt wird und dabei gereinigt wird. In diesem Temperaturbereich werden im Rückbrüden enthaltene Schadstoffe, wie VOCs, stickstoffbasierte Schadstoffe, wie Ammoniak oder Lachgas, sowie Feststoffpartikel (beispielsweise Staubpartikel) verbrannt.

Der Volumenstrom des dem Brenner zugeführten ersten Brüdenteils und/oder der Volumenstrom des der Mischkammer zugeführten zweiten Brüdenteils kann bevorzugt in Abhängigkeit von der Brennerleistung und/oder dem in der Trocknungskammer benötigten Volumenstrom gesteuert werden. Der Volumenstrom des zum Brenner rückgeführten ersten Brüdenteils kann abhängig davon gesteuert werden, ob der Brüden der Brennkammer, der Brennermuffel oder der Brennkammer und der Brennermuffel zugeführt werden soll. Insbesondere kann der erste rückgeführte Brüdenteil anteilsmäßig auf die Brennkammer und die Brennermuffel aufgeteilt werden.

Der Schritt des Verbrennens kann ein Verbrennen der im rückgeführten Brüdenteil enthaltenen Schadstoffe bei Temperaturen im Bereich von 750 °C bis 1200 °C umfassen. Die Verbrennung erfolgt durch die Brennerflamme in der Hochtemperaturzone des Brenners. Dadurch wird der zum Brenner rückgeführte Brüdenteil gereinigt, wodurch insgesamt die Schadstoffbilanz von Trocknungsanlagen erheblich verbessert wird. Durch die Rückführung wenigstens eines Teils des Brüdens in die Brennkammer kann aber auch Energie eingespart werden, da der rückgeführte Brüdenteil bereits eine Temperatur von größer als 100 °C aufweist. Somit muss der Brenner wesentlich weniger Wärmeenergie aufwenden, als wenn dem Brenner lediglich kaltes Trocknungsgas (Trocknungsluft) zugeführt wird, das dann auf die gewünschte Betriebstemperatur erhitzt werden muss.

### Kurze Beschreibung der Zeichnungen

Weitere Einzelheiten und Vorteile der Erfindung werden anhand der in den Zeichnungen dargestellten, nicht einschränkenden Ausführungsbeispiele weiter beschrieben. Es zeigen:
- Figur 1: eine schematische Darstellung einer Anlage umfassend eine Trocknungsanlage für OSB-Strands gemäß der vorliegenden Erfindung; und
- Figur 2: ein Flussdiagramm, das ein erfindungsgemäßes Verfahren zum Reduzieren von Schadstoffen in einer Trocknungsanlage für OSB-Strands darstellt.

### Detaillierte Beschreibung

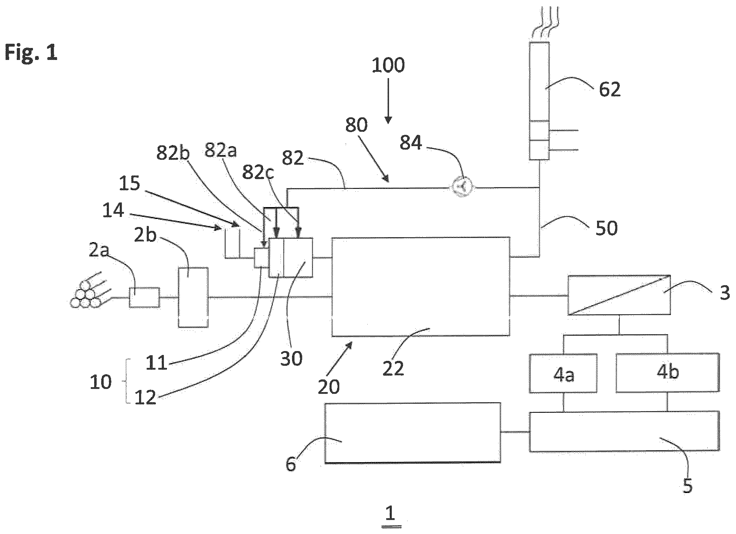

Figur 1 zeigt eine schematische Darstellung einer Anlage 1 zur Herstellung von OSB (Oriented Strand Board).

Die Anlage 1 umfasst eine Vorrichtung 2a, 2b zur Herstellung von OSB-Strands, eine Trocknungsanlage 100 zur Trocknung der hergestellten OSB-Strands, eine Vorrichtung 4a, 4b zur Beleimung der getrockneten OSB-Strands, eine Vorrichtung 5 zur orientierten Schichtung von beleimten OSB-Strands in mehreren Lagen, und eine Pressvorrichtung 6 zur Verpressung der Lagen zu einer OSB-Platte. Die Anlage 1 kann ferner einen Sichter 3 zur Trennung von OSB-Strands unterschiedlicher Größe umfassen.

Im Folgenden werden die Komponenten der Anlage 1 weiter beschrieben. Die Vorrichtung 2a, 2b zur Herstellung von OSB-Strands kann einen Entrinder 2a umfassen, welcher dazu ausgelegt ist, Rundholz (mit relativ hoher Feuchtigkeit) zu entrinden. Die Vorrichtung kann ferner einen Zerspaner 2b umfassen, welcher dazu ausgelegt ist, das entrindete Rundholz zu zerspanen. Als Zerspaner 2b kann ein Scheiben-,Trommel- oder Messerring-Zerspaner zum Einsatz kommen. Mit Hilfe des Zerspaners 2b werden aus dem entrindeten Rundholz Strands (lange schlanke Späne) erzeugt, deren Länge im Bereich von 100 bis 200 mm und Breite im Bereich von 10 bis 50 mm liegen kann. Die Dicke kann im Bereich von 0,5 bis 1 mm liegen.

Die erzeugten (feuchten) Strands werden der Trocknungsanlage 100 zur Trocknung zugeführt. Genauer gesagt werden die Strands einer Trockenkammer 22 eines Trockners 20 zugeführt und dort mit Hilfe von eingeleitetem Trocknungsgas bzw. Trocknungsluft getrocknet. Eine Ausführungsform einer erfindungsgemäßen Trocknungsanlage 100 wird weiter unten noch im Detail beschrieben.

Die getrockneten Strands werden einem Sichter 3 zugeführt. Der Sichter 3 ist dazu ausgebildet, die Strands zu klassifizieren bzw. nach unterschiedlichen Größen zu separieren. Kleinere Strands können hierbei für die Erzeugung einer Mittelschicht eines OSB eingesetzt werden, während größere Strands für die Erzeugung der Deckschichten eingesetzt werden können. Die nach Größen klassifizierten Strands werden der Vorrichtung 4a, 4b zur Beleimung der Strands zugeführt. Die größeren Strands werden hierbei einer Beleimungseinrichtung 4a zugeführt und dort beleimt, während die feineren Strands einer Beleimungseinrichtung 4b zugeführt werden und dort beleimt werden.

Die beleimten Strands werden anschließend einer Vorrichtung 5 zur orientierten Schichtung der beleimten OSB-Strands in mehreren Lagen zugeführt. Die Vorrichtung 5 ist dazu ausgebildet, die beleimten größeren Strands zu einer oder mehreren Mittelschichten (Mittellagen) zu orientieren und die feineren Strands zu einer oder mehreren Deckschichten (Decklagen) zu orientieren.

Die so erzeugten Lagen mit ausgerichteten OSB-Strands werden anschließend der Pressvorrichtung 6 zugeführt. Die Pressvorrichtung 6 ist dazu ausgebildet, die Lagen zu einem OSB zu verpressen. Dies geschieht unter Einwirkung von Druck und Temperatur, bei denen der Leim ausgehärtet und die Lagen zu einer Platte vorgegebener Dicke verpresst werden. Als Pressvorrichtung kann eine Rollpresse zum Einsatz kommen.

Im Folgenden wird die Trocknungsanlage 100 weiter beschrieben.

Die Trocknungsanlage 100 umfasst einen Brenner 10 mit einer Brennkammer 12, den Trockner 20 mit einer Trocknungskammer 22 sowie eine zwischen der Brennkammer 12 und der Trocknungskammer 22 angeordnete Mischkammer 30. Die Trocknungsanlage 100 kann ferner eine am Ausgang der Trocknungskammer 12 angeordnete Trenneinrichtung (nicht dargestellt) zur Trennung von Brüden und OSB-Strands umfassen. Ferner kann die Trocknungsanlage 100 eine mit der Mischkammer 30 (bzw. Trenneinrichtung) gekoppelte Brüden-Ableitung 50, eine Vorrichtung 80 zur Rückführung wenigstens eines Teils des Brüdens zum Brenner 10 (und optional eines weiteren Teils zur Mischkammer 20) sowie eine Filtereinrichtung 62 zur Schadstofffilterung jenes Brüdenteils umfassen, der an die Umwelt abgegeben wird. Die Vorrichtung 80 zur Rückführung wenigstens eines Teils des Brüdens wird im Folgenden auch kurz als Rückführvorrichtung 80 bezeichnet.

Der Brenner 10 ist dazu ausgebildet, der Mischkammer 30 ein heißes Trocknungsgas bereitzustellen. Der Brenner 10 weist hierfür eine Brennkammer 10 und einen Muffelbereich 11 mit Brennmittelzuführung 14 (z.B. Gas, Öl oder Holzstaub) und einer Zuführung 15 für Verbrennungsgas/-luft und/oder Trocknungsgas/-luft auf. Das/die Verbrennungsgas/-luft und/oder Trocknungsgas/-luft wird der Brennkammer 12 zugeführt und dort mit Hilfe der Brennerflamme auf eine gewünschte Temperatur erhitzt. Als Brenner kann ein Gasbrenner, Ölbrenner, Staubbrenner (beispielsweise ein Holzstaubbrenner) oder ein Mehrstoffbrenner zum Einsatz kommen, der dazu ausgebildet ist, in der Brennkammer Flammentemperaturen im Bereich von 600 °C bis 1200 °C, bevorzugt im Bereich von 600 °C bis 800 °C zu erzeugen. Das/die die Brennkammer 12 verlassende erhitzte Trocknungsgas/-luft kann somit ebenso eine Temperatur im Bereich von 600 °C bis 1200 °C, bevorzugt im Bereich von 600 °C bis 800 °C aufweisen. Nachfolgend wird einheitlich der Begriff Trocknungsgas bzw. Verbrennungsgas verwendet, wobei klar sein sollte, dass damit auch Trocknungsluft bzw. Verbrennungsluft gemeint sein kann.

Das in der Brennkammer 12 erhitzte Trocknungsgas wird der Mischkammer 30 zugeführt und dort mit einem aus der Trocknungskammer 22 stammenden und über die Rückführvorrichtung 80 rückgeführten Brüdenteil (Rückbrüdenteil) vermischt. Durch die Rückführung und Wiederverwendung wenigstens eines Teils des am Ausgang der Trocknungskammer 22 ausströmenden Brüdens kann die Energieeffizienz der Trocknungsanlage 100 wesentlich gesteigert werden. Optional kann der Mischkammer 30 ein weiterer Gasstrom (Luftstrom) mit vorgewärmtem Gas (Luft) zugeführt werden (in Figur 1 nicht dargestellt), der beispielsweise in einer außerhalb der Trocknungsanlage 100 betriebenen externen Anlage (beispielsweise einer holzverarbeitenden Anlage) frei wird. Dadurch kann die Energiebilanz der Trocknungsanlage 100 weiter verbessert werden.

Durch die Mischung des von der Brennkammer 12 bereitgestellten erhitzten Trocknungsgases mit dem rückgeführten Brüdenteil (und optionalen weiteren zugeführten Gasströmen) sinkt die Temperatur des in der Mischkammer 30 resultierenden und für die Trocknungskammer 22 bereitgestellten Trocknungsgases (Trocknungsgasgemisch). Die Temperatur wird durch entsprechende Mischung und Gaszuführung aus der Brennkammer 12 jedoch so eingestellt, dass das resultierende Trocknungsgas in der Mischkammer 30 einen gewünschten Temperaturwert aufweist, der ungefähr 20 °C bis 40 °C oberhalb der Temperatur am Trocknereingang ist. Dieser Temperaturüberschuss in der Mischkammer 30 kann notwendig sein, um Wärmeverluste durch Konvektion und Strahlung zu kompensieren.

Der Trockner 20 ist bevorzugt ein Trommeltrockner, der je nach Menge und Beschaffenheit (Größe, Feuchtigkeitsgehalt, Holzart) der OSB-Strands im Temperaturbereich von 230 °C bis 500 °C, bevorzugt im Temperaturbereich von 250 °C bis 400 °C (beispielsweise bei 350 °C) betrieben wird. Entsprechend liegt die Temperatur des in der Mischkammer 30 bereitgestellten Trocknungsgases in einem um 20 °C bis 40 °C höheren Temperaturbereich. Derartige Temperaturen reichen aus, um OSB-Strands zu trocknen.

Die zu trocknenden OSB-Strands werden am Trocknungskammereingang der Trocknungskammer 22 (kontinuierlich) zugeführt und innerhalb der Trocknungskammer 22 (kontinuierlich) weitergeleitet, bis sie den Trocknungskammerausgang erreichen. Der Prozess des Zuführens und Beförderns der OSB-Strands innerhalb der Trocknungskammer 22 ist in der schematischen Darstellung in Figur 1 nicht dargestellt. Ferner wird von der Mischkammer 30, in Abhängigkeit von der Menge und der Beschaffenheit der zu trocknenden OSB-Strands, ein gewünschter Trocknungsgasvolumenstrom für die Trocknungskammer 22 bereitgestellt. Das der Trocknungskammer 22 zugeführte heiße Trocknungsgas umströmt und erwärmt die OSB-Strands und nimmt die dabei frei werdende Feuchtigkeit auf, wodurch die OSB-Strands getrocknet werden.

Die oben genannte Arbeitstemperatur im Temperaturbereich von 230 °C bis 500 °C, bevorzugt im Bereich von 250 °C bis 400 °C wird im Wesentlichen über den Brenner 10 (beispielsweise durch Steuerung der Brennstoffzufuhr und damit der Brennerleistung) gesteuert. Jedenfalls ist die Temperatur in der Trocknungskammer 22 zu jedem Zeitpunkt derart eingestellt, dass die beim Trockenvorgang frei werdende Feuchtigkeit und Schadstoffe innerhalb der Trocknungskammer 22 nicht wieder kondensieren können.

Entsprechend weist der am Ausgang der Trocknungskammer 22 ausströmende Brüden eine relative hohe Temperatur auf, die über der Kondensationstemperatur von Wasserdampf liegt. Typische Temperaturwerte des Brüdens am Ausgang der Trocknungskammer 22 liegen oberhalb von 100 °C, bevorzugt im Temperaturbereich von 115 °C bis 135°C (beispielsweise bei ungefähr 125 °C).

Nach Abtrennung von im Brüden mitgeführten OSB-Strands in einer am Ausgang der Trocknungskammer 22 bereitgestellten Trenneinrichtung (in der Figur 1 nicht dargestellt) kann wenigstens ein Teil des Brüdens über die Rückführvorrichtung 80 wenigstens dem Brenner 10 wieder zugeführt werden. Der verbleibende Teil kann über die Brüden-Ableitung 50 der Filtereinrichtung 62 zugeführt, dort gereinigt/gefiltert und in die Umwelt abgegeben werden.

Die Rückführvorrichtung 80 umfasst in der in Figur 1 gezeigten Trocknungsanlage 100 wenigsten eine Rückführleitung 82. Diese ist mit ihrem ersten Ende mit der Brüden-Ableitung 50 gekoppelt. Alternativ ist auch denkbar, dass die wenigsten eine Rückführleitung 82 mit ihrem ersten Ende (direkt) mit dem Ausgang der Trocknungskammer 22 bzw. mit der am Ausgang bereitgestellten Trenneinrichtung zur Trennung von Brüden und OSB-Strands gekoppelt ist. Ferner ist die Rückführleitung 82 mit ihrem zweiten Ende mit dem Brenner 10 gekoppelt, um einen ersten Teil des Rückbrüdens zu dem Brenner 10 rückzuführen. Die Rückführleitung 82 kann ferner mit der Mischkammer 30 gekoppelt sein, um einen zweiten Teil des Rückbrüdens der Mischkammer wieder zuzuführen.

In der in der Figur 1 gezeigten Ausführung weist die Rückführleitung 82 an ihrem zweiten Ende drei Teilleitungen auf, wobei eine erste Teilleitung 82a (direkt) zur Brennerkammer 12, eine zweite Teilleitung 82b zur Brennermuffel 11 und eine dritte Teilleitung 82c zur Mischkammer 30 führt.

Über die erste Teilleitung 82a kann ein Teil des dem Brenner 10 rückgeführten ersten Rückbrüdenteils als Verbrennungsgas direkt in die Brennkammer 12 des Brenners 10 eingeleitet werden und dort mit Hilfe der Brennerflamme auf Temperaturen von größer oder gleich 600 °C, beispielsweise auf eine Temperatur im Temperaturbereich von 600 °C bis 1200 °C, bevorzugt auf eine Temperatur im Temperaturbereich 600 °C bis 800 °C erhitzt werden. Über die zweite Teilleitung 82b kann ferner ein weiterer Teil des zum Brenner 10 rückgeführten ersten Rückbrüdenteils als Kühlgas/-luft der Brennermuffel 11 zugeführt werden. Auch dieser Rückbrüdenteil wird anschließend in die Brennkammer 12 geleitet und dort auf Temperaturen im Temperaturbereich von 600 °C bis 1200 °C, bevorzugt auf Temperaturen im Temperaturbereich von 600 °C bis 800 °C, weiter erhitzt und gereinigt.

Durch die starke Erhitzung des Rückbrüdens auf Temperaturen im Temperaturbereich von 600 °C bis 1200 °C können in beiden Fällen (direkte Rückführung zur Brennkammer 12 oder Rückführung über die Brennermuffel 11) die im Rückbrüden mitgeführten Schadstoffe (insbesondere VOCs (z.B. flüchtige Terpene), stickstoffbasierte Schadstoffe (z.B. Lachgas, Ammoniak) und/oder Feststoffpartikel, die beim Trocknen von OSB-Strands vermehrt auftreten) oxidiert/verbrannt werden. Somit kann eine effektive Reinigung des rückgeführten Brüdens durch direkte Verbrennung der Schadstoffe im Brenner 10 erzielt werden, wodurch die Schadstoffbilanz der Trocknungsanlage 100 verbessert werden kann.

Über die dritte Teilleitung 82c kann ein zweiter Rückbrüdenteil der Mischkammer 30 wieder zugeführt werden. Dieser rückgeführte Brüdenteil wird aufgrund der wesentlich niedrigeren Temperaturen in der Mischkammer (Temperaturen im Bereich von 250 °C bis 400 °C) nicht nennenswert gereinigt. Durch die Mischung des zweiten Rückbrüdenteils mit aus der Brennkammer 12 bereitgestelltem Trocknungsgas kann jedoch die Energiebilanz der Trocknungsanlage 100 verbessert werden. Denn, wie unten noch näher beschrieben wird, ist die Rückführvorrichtung 80 dazu ausgebildet, den rückgeführten Brüden auf Temperaturen von größer als 100 °C zu halten; dadurch weist der rückgeführte Brüden einen hohen thermischen Energiegehalt auf; insbesondere muss keine erneute Verdampfungswärme aufgebracht werden.

Um die Energiebilanz und insbesondere die Schadstoffbilanz der Trocknungsanlage 100 zu verbessern bzw. zu optimieren, ist es wünschenswert, einen möglichst großen Teil des am Ausgang der Trocknungskammer 22 austretenden Brüdens zum Brenner 10 rückzuführen. Die Menge (Volumenstrom) des Rückbrüdens, die (der) an den Brenner 10 rückgeführt werden kann, hängt insbesondere von der Betriebslast des Brenners 10 ab, die wiederum von der Beschaffenheit und Menge der zu trocknenden OSB-Strands abhängt. Ferner muss darauf geachtet werden, dass der in die Brennkammer 12 rückgeführte, eher sauerstoffarme Brüdenteil nicht dazu führt, dass der Sauerstoffgehalt des Verbrennungsgases in der Brennkammer auf unter 13 Vol.-% fällt, wodurch eine stabile Verbrennung nicht mehr gewährleistet wäre. Um dies zu vermeiden, kann über die Zuführung 15 ein Volumenstrom an externem Verbrennungsgas/-luft mit deutlich höherem Sauerstoffgehalt (ca. 20-21 Vol.%) der Brennkammer 12 kontinuierlich zugeführt werden, der dann mit dem Volumenstrom des rückgeführten Brüdens in der Brennkammer 12 vermischt wird.

Die Rückführvorrichtung 80 ist dazu ausgelegt, den Volumenstrom des zum Brenner 10 bzw. zur Mischkammer rückgeführten ersten und zweiten Brüdenteils in Abhängigkeit der Betriebslast (und insbesondere auch in Abhängigkeit des Sauerstoffgehaltes in der Brennkammer 12) zu steuern. Hierfür weist die Rückführvorrichtung 80 eine Steuereinrichtung auf, die wenigstens einen in der Rückführleitung 82 angeordneten Förderventilator 84 aufweist. Über diesen Förderventilator 84 kann der Volumenstrom des durch die Rückführleitung 82 geleiteten Brüdens aktiv eingestellt werden.

Die Steuereinrichtung kann ferner eine Ventileinrichtung umfassen, welche dazu vorgesehen ist, den über die Rückführleitung 82 rückgeführten Volumenstrom an Rückbrüden auf die zur Mischkammer 30 und zum Brenner 10 bzw. zur Brennermuffel 11 und zur Brennkammer 12 führenden Teilleitungen 82a, 82b, 82c aufzuteilen. Die Ventileinrichtung ist in der Figur 1 nicht dargestellt. Gemäß einer einfachen Implementierung kann die Ventileinrichtung wenigstens ein Klappventil umfassen, welches dazu ausgebildet ist, den rückgeführten Volumenstrom in entsprechende Teilvolumenströme für die Teilleitungen 82a, 82b, 82c aufzuteilen.

Es versteht sich, dass die in Figur 1 gezeigte Rückführvorrichtung 80 eine beispielhafte Implementierung darstellt. Denkbar ist auch eine Rückführvorrichtung 80, bei der die Rückführleitung 82 lediglich zur Brennkammer 12 des Brenners 10 führt. In diesem Fall kann die Ventileinrichtung zur Aufteilung des rückgeführten Volumenstroms in Teilvolumenströme auch entfallen.

Wie bereits oben angedeutet, ist die Rückführvorrichtung 80 ferner dazu ausgebildet, den rückgeführten Brüden (Volumenstrom) auf einer Temperatur oberhalb der Kondensationstemperatur des im Brüdenteil mitgeführten Wasserdampfes zu halten. Um dies zu erreichen, kann die Rückführvorrichtung 80, insbesondere die Rückführleitung 82 wärmeisoliert sein. Zusätzlich kann die Rückführvorrichtung 80 eine Vorwärmeinrichtung aufweisen (in Figur 1 nicht dargestellt). Diese kann dazu ausgebildet sein, die Rückführleitung 82 auf einem gewünschten Temperaturniveau zu halten. Beispielsweise kann die Vorwärmeinrichtung eine Vorwärmgasquelle umfassen oder mit einer externen Vorwärmgasquelle gekoppelt sein. Die (externe) Vorwärmgasquelle kann mit der Rückführleitung 82 wahlweise gekoppelt werden. Die Vorwärmgasquelle kann dazu ausgebildet sein, warmes Gas bzw. warme Luft zur Vorwärmung der Rückführleitung 82 in die Rückführleitung 82 einzuspeisen. Obwohl die Rückführleitung 82 thermisch isoliert ist, kann es bei kalten Umgebungstemperaturen und insbesondere beim Anfahren der Trocknungsanlage 100 vorkommen, dass die Rückführleitung 82 "ausgekühlt" ist. In diesem Fall kann die Vorwärmgasquelle bedarfsweise aktiviert werden, um Vorwärmgas in die Rückführleitung 82 einzuspeisen.

In der Regel ist es ausreichend, wenn das von der Vorwärmgasquelle bereitgestellte Vorwärmgas eine Temperatur aufweist, die nicht wesentlich tiefer als die Temperatur des Rückbrüdens ist, vorzugsweise in einem Temperaturbereich von 70 °C bis 110 °C, noch bevorzugter in einem Temperaturbereich von 80 °C bis 100 °C liegt. Diese Temperatur reicht in der Regel aus, um die Rückführleitung 82 genügend stark vorzuwärmen, so dass ein Abkühlen des Rückbrüdens auf unterhalb der Kondensationstemperatur vermieden werden kann.

Durch die thermische Isolierung und die hier beschriebene optionale Vorwärmeinrichtung kann somit sichergestellt werden, dass der Rückbrüden bei seiner Rückführung jederzeit oberhalb der Kondensationstemperatur gehalten wird. Dadurch wird verhindert, dass in dem Rückbrüdenteil mitgeführter Wasserdampf bzw. Schadstoffe unkontrolliert entlang der Rückführleitung 82 oder in der Brennkammer 10 oder der Brennermuffel 11 kondensieren.

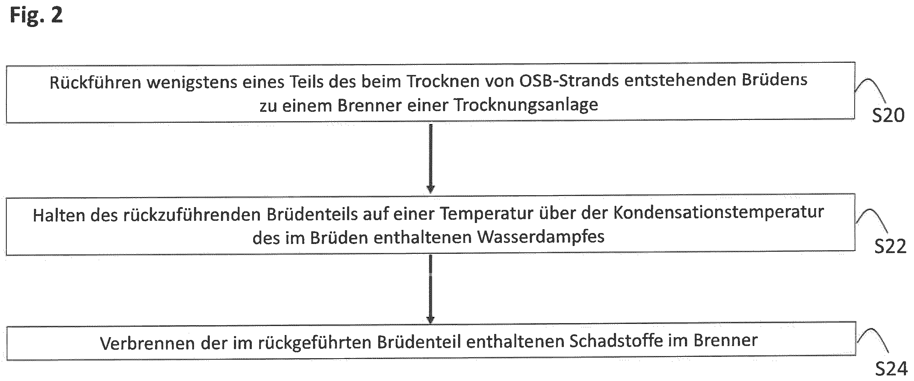

In Zusammenhang mit Figur 2 wird ein erfindungsgemäßes Verfahren zum Reduzieren von Schadstoffen in einer Trocknungsanlage für OSB-Strands weiter diskutiert. Das Verfahren kann mit Hilfe der in Zusammenhang mit Figur 1 beschriebenen Trocknungsanlage 100, insbesondere mit Hilfe der dort beschriebenen Rückführvorrichtung 80 realisiert werden.

Gemäß einem ersten Schritt S20 wird über die Rückführvorrichtung 80, insbesondere über die Rückführleitung 82 wenigstens ein Teil des beim Trocknen von OSB-Strands entstehenden Brüdens zu dem Brenner 10 rückgeführt.

Dieser an den Brenner 10 rückgeführte Rückbrüdenteil wird dabei mit Hilfe der Rückführvorrichtung 80 auf einer Temperatur gehalten, die über der Kondensationstemperatur des im Brüden enthaltenen Wasserdampfs liegt (zweiter Schritt S22). Dies kann einerseits durch geeignete Isolierung der Rückführleitung 82 realisiert werden. Bei Bedarf kann aber auch eine Vorwärmeinrichtung zum Einsatz kommen, welche die Rückführleitung 82 auf eine gewünschte Temperatur vorwärmt.

In einem dritten Schritt S24 wird dann der rückgeführte Rückbrüdenteil im Brenner 10 stark erhitzt. Insbesondere wird der Rückbrüdenteil durch die Hochtemperaturzone der Brennkammer 12 geleitet (Zone mit Temperaturen im Bereich von 600 °C bis 1200 °C), wodurch die mitgeführten Schadstoffe effektiv oxidiert/verbrannt werden.

Die hier beschriebene Technik zur Reduzierung von Schadstoffen hat gegenüber dem Stand der Technik mehrere Vorteile. Sie ist einfach, platzsparend und kostengünstig, da sie keine zusätzlichen Reinigungsanlagen benötigt. Vielmehr wird wenigstens ein Teil des Rückbrüdens direkt zum bereits vorhandenen Brenner der Trocknungsanlage rückgeführt und dort gereinigt. Durch die Reinigung kann die Schadstoffemission von Trocknungsanlagen deutlich reduziert werden. Die hier beschriebene Technik überwindet aber auch ein lang gehegtes Vorurteil, wonach ein mit Wasserdampf gesättigter Brüden nicht direkt zum Brenner bzw. in die Brennkammer rückgeführt werden kann, da in diesem Fall kein stabiler Betrieb der Trocknungsanlage möglich sei.

## Patentansprüche

1. Trocknungsanlage (100) zum Trocknen von OSB-Strands, umfassend:
einen Trockner (20) mit einer Trocknungskammer (22), die dazu ausgebildet ist, OSB-Strands unter Einleitung von heißem Trocknungsgas in die Trocknungskammer (22) zu trocknen;
einen Brenner (10) mit einer Brennkammer (12) zur Bereitstellung von heißem Trocknungsgas; und
eine Vorrichtung (80) umfassend eine Rückführleitung (82), die thermisch isoliert ist und mit ihrem ersten Ende mit dem Ausgang der Trocknungskammer (22) oder mit einer Brüden-Ableitung (50) und mit ihrem zweiten Ende mit dem Brenner gekoppelt ist, und die dazu ausgebildet ist, wenigstens einen Teil des aus der Trocknungskammer (12) austretenden Brüdens direkt zu dem Brenner (10) rückzuführen, um die im Brüdenteil enthaltenen Schadstoffe im Brenner (10) zu verbrennen,
wobei die Vorrichtung (80) ferner dazu ausgebildet ist, die Temperatur des zum Brenner (10) rückzuführenden Brüdenteils auf einer Temperatur über der Kondensationstemperatur des im Brüdenteil mitgeführten Wasserdampfes zu halten.

2. Trocknungsanlage (100) nach Anspruch 1, wobei die Rückführleitung (82) mit ihrem zweiten Ende mit der Brennkammer (12) und/oder der Muffel (11) des Brenners (10) gekoppelt ist.

3. Trocknungsanlage (100) nach Anspruch 2, wobei die Vorrichtung (80) ferner eine Vorwärmgasquelle umfasst, die wahlweise mit der Rückführleitung (82) koppelbar ist, um Vorwärmgas im Temperaturbereich von 70 °C bis 110 °C, vorzugsweise im Temperaturbereich von 80 °C bis 100 °C, in die Rückführleitung (82) einzuleiten.

4. Trocknungsanlage (100) nach einem der Ansprüche 1 bis 3, wobei die Vorrichtung (80) ferner eine Steuereinrichtung zur Steuerung des Volumenstroms des rückzuführenden Brüdenteils umfasst.

5. Trocknungsanlage (100) nach Anspruch 4, wobei die Steuereinrichtung umfasst:
wenigstens einen in der Rückführleitung (82) angeordneten Förderventilator (84) zur Einstellung des Volumenstroms des rückzuführenden Brüdenteils; und/ oder
wenigstens eine in der Rückführleitung (82) angeordnete Ventileinheit zur Regelung des Volumenstromanteils des rückzuführenden Brüdenteils, welcher der Brennkammer (12) und/oder der Muffel (11) des Brenners (10) zuzuführen ist.

6. Trocknungsanlage (100) nach einem der Ansprüche 1 bis 5, wobei die Vorrichtung (80) ferner dazu ausgebildet ist, einen ersten Brüdenteil zum Brenner (10) und einen zweiten Brüdenteil zu einer Mischkammer (30) rückzuführen, wobei die Mischkammer (30) dazu ausgebildet ist, vom Brenner (10) bereitgestelltes Trocknungsgas mit dem von der Vorrichtung (80) rückgeführten Brüdenteil zu vermischen und der Trocknungskammer (22) bereitzustellen.

7. Anlage (1) zur Herstellung von OSB, umfassend:
eine Vorrichtung (2a, 2b) zur Herstellung von OSB-Strands;
die Trocknungsanlage (100) nach einem der Ansprüche 1 bis 6 zur Trocknung der OSB-Strands;
eine Vorrichtung (4a, 4b) zur Beleimung der getrockneten OSB-Strands;
eine Vorrichtung (5) zur orientierten Schichtung der beleimten OSB-Strands in mehrere Lagen; und
eine Pressvorrichtung (6) zur Verpressung der Lagen zu einem OSB.

8. Verfahren zum Reduzieren von Schadstoffen, die beim Trocknen von OSB-Strands in einer OSB-Strand-Trocknungsanlage (100) nach einem der Ansprüche 1 bis 6 entstehen, wobei das Verfahren umfasst:
Rückführen wenigstens eines Teils des beim Trocknen von OSB-Strands entstehenden Brüdens zu dem Brenner (10) der Trocknungsanlage (100), wobei der wenigstens eine Teil des Brüdens über die Rückführleitung der Trocknungsanlage (100) direkt zum Brenner (10) rückgeführt wird;
Halten des zum Brenner (10) rückzuführenden Brüdenteils auf einer Temperatur über der Kondensationstemperatur des im Brüdenteil enthaltenen Wasserdampfs; und
Verbrennen der im rückgeführten Brüdenteil enthaltenen Schadstoffe im Brenner (10).

9. Verfahren nach Anspruch 8, wobei die Temperatur des rückgeführten Brüdenteils während des Rückführens jederzeit über der Kondensationstemperatur gehalten wird.

10. Verfahren nach Anspruch 8 oder 9, wobei die Temperatur des rückzuführenden Brüdenteils auf mindestens 100 °C gehalten wird, bevorzugt auf einer Temperatur im Temperaturbereich von 100 °C bis 135 °C, noch bevorzugter auf einer Temperatur im Temperaturbereich von 115 °C bis 125 °C gehalten wird.

11. Verfahren nach einem der Ansprüche 8 bis 10, wobei der Schritt des Haltens der Temperatur über der Kondensationstemperatur ein wahlweises Vorwärmen der zur Rückführung des Brüdens vorgesehenen Rückführleitung (82) umfasst, und, optional, wobei das Vorwärmen ein Einleiten von Vorwärmluft in die Rückführleitung (82) umfasst.

12. Verfahren nach einem der Ansprüche 8 bis 11, wobei der Schritt des Rückführens ein Rückführen eines ersten Brüdenteils zum Brenner (10), insbesondere zur Brennkammer (12) und/oder zur Brennermuffel (11), und eines zweiten Brüdenteils zu einer Mischkammer (30) umfasst.

13. Verfahren nach Anspruch 12, wobei der Schritt des Rückführens ein Steuern des Volumenstroms des zu dem Brenner (12) rückgeführten ersten Brüdenteils und des zu der Mischkammer (30) rückgeführten zweiten Brüdenteils umfasst.

14. Verfahren nach einem der Ansprüche 8 bis 13, wobei der Schritt des Verbrennens ein Verbrennen der im rückgeführten Brüdenteil enthaltenen Schadstoffe bei Temperaturen im Bereich von 750 °C bis 1200 °C umfasst.

## Claims

1. A drying plant (100) for drying OSB strands, comprising:
a dryer (20) with a drying chamber (22) configured to dry OSB strands by introducing hot drying gas into the drying chamber (22);
a burner (10) with a combustion chamber (12) for providing hot drying gas; and
a device (80) comprising a return line (82) that is thermally insulated and coupled with its first end to the outlet of the drying chamber (22) or to a dryer exhaust air discharge (50) and with its second end to the burner, and which is configured to return at least a portion of the dryer exhaust air exiting the drying chamber (22) directly to the burner (10) in order to burn the pollutants contained in the dryer exhaust air portion in the burner (10),
wherein the device (80) is further configured to maintain the temperature of the dryer exhaust air portion to be returned to the burner (10) at a temperature above the condensation temperature of the water vapour carried in the dryer exhaust air portion.

2. The drying plant (100) according to claim 1, wherein the return line (82) is coupled with its second end to the combustion chamber (12) and/or the muffle (11) of the burner (10).

3. The drying plant (100) according to claim 2, wherein the device (80) further comprises a preheating gas source which is selectively coupleable to the return line (82) in order to introduce preheating gas in the temperature range from 70 °C to 110 °C, preferably in the temperature range from 80 °C to 100 °C, into the return line (82).

4. The drying plant (100) according to one of claims 1 to 3, wherein the device (80) further comprises a control device for controlling the volume flow of the dryer exhaust air portion to be returned.

5. The drying plant (100) according to claim 4, wherein the control device comprises:
at least one conveyor fan (84) arranged in the return line (82) for adjusting the volume flow of the dryer exhaust air portion to be returned; and/or
at least one valve unit arranged in the return line (82) for regulating the volume flow rate of the dryer exhaust air portion to be returned, which is to be supplied to the combustion chamber (12) and/or the muffle (11) of the burner (10).

6. The drying plant (100) according to one of claims 1 to 5, wherein the device (80) is further configured to return a first dryer exhaust air portion to the burner (10) and a second dryer exhaust air portion to a mixing chamber (30), wherein the mixing chamber (30) is configured to mix drying gas provided by the burner (10) with the dryer exhaust air portion returned by the device (80) and to supply it to the drying chamber (22).

7. A plant (1) for producing OSB, comprising:
a device (2a, 2b) for producing OSB strands;
the drying plant (100) according to one of claims 1 to 6 for drying the OSB strands;
a device (4a, 4b) for gluing the dried OSB strands;
a device (5) for oriented layering of the glued OSB strands into several layers; and
a pressing device (6) for pressing the layers into an OSB.

8. A method for reducing pollutants generated during the drying of OSB strands in an OSB strand drying plant (100) according to one of claims 1 to 6, wherein the method comprises:
returning at least a portion of the dryer exhaust air generated during the drying of OSB strands to the burner (10) of the drying plant (100), wherein the at least a portion of the dryer exhaust air is returned directly to the burner (10) via the return line of the drying plant (100);
maintaining the dryer exhaust air portion to be returned to the burner (10) at a temperature above the condensation temperature of the water vapour contained in the dryer exhaust air portion; and
burning the pollutants contained in the returned dryer exhaust air portion in the burner (10).

9. The method according to claim 8, wherein the temperature of the returned dryer exhaust air portion is maintained above the condensation temperature at all times during the return.

10. The method according to claim 8 or 9, wherein the temperature of the vapour portion to be returned is maintained at at least 100 °C, preferably at a temperature in the temperature range from 100 °C to 135 °C, more preferably at a temperature in the temperature range from 115 °C to 125 °C.

11. The method according to one of claims 8 to 10, wherein the step of maintaining the temperature above the condensation temperature comprises a selective preheating of the return line (82) provided for returning the dryer exhaust air, and, optionally, wherein the preheating comprises introducing preheated air into the return line (82).

12. The method according to one of claims 8 to 11, wherein the step of returning comprises returning a first dryer exhaust air portion to the burner (10), in particular to the combustion chamber (12) and/or to the burner muffle (11), and a second dryer exhaust air portion to a mixing chamber (30).

13. The method according to claim 12, wherein the step of returning comprises controlling the volume flow of the first dryer exhaust air portion returned to the burner (10) and the second dryer exhaust air portion returned to the mixing chamber (30).

14. The method according to one of claims 8 to 13, wherein the step of combusting comprises combusting the pollutants contained in the returned dryer exhaust air portion at temperatures in the range from 750 °C to 1200 °C.

## Revendications

1. Installation de séchage (100) pour sécher des copeaux OSB, comprenant :
un séchoir (20) avec une chambre de séchage (22) configurée pour sécher des copeaux OSB en introduisant du gaz de séchage chaud dans la chambre de séchage (22) ;
un brûleur (10) avec une chambre de combustion (12) pour fournir du gaz de séchage chaud ; et
un dispositif (80) comprenant une conduite de recirculation (82) qui est isolée thermiquement et qui est couplée par sa première extrémité à la sortie de la chambre de séchage (22) ou à une dérivation d'air de séchage évacué (50) et par sa deuxième extrémité au brûleur, et qui est configurée pour recirculer au moins une partie de l'air de séchage évacué sortant de la chambre de séchage (22) directement vers le brûleur (10) afin de brûler les polluants contenus dans la partie de l'air de séchage évacué dans le brûleur (10),
le dispositif (80) étant en outre configuré pour maintenir la température de la partie de l'air de séchage évacué à recirculer vers le brûleur (10) à une température supérieure à la température de condensation de la vapeur d'eau contenue dans la partie de l'air de séchage évacué.

2. Installation de séchage (100) selon la revendication 1, dans laquelle la conduite de recirculation (82) est couplée par sa deuxième extrémité à la chambre de combustion (12) et/ou au moufle (11) du brûleur (10).

3. Installation de séchage (100) selon la revendication 2, dans laquelle le dispositif (80) comprend en outre une source de gaz de préchauffage qui peut être couplée de manière sélective à la conduite de recirculation (82) afin d'introduire du gaz de préchauffage dans la plage de température de 70 °C à 110 °C, de préférence dans la plage de température de 80 °C à 100 °C, dans la conduite de recirculation (82).

4. Installation de séchage (100) selon l'une des revendications 1 à 3, dans laquelle le dispositif (80) comprend en outre un moyen de commande pour commander le débit volumique de la partie de l'air de séchage évacué à recirculer.

5. Installation de séchage (100) selon la revendication 4, dans laquelle le dispositif de commande comprend :
au moins un ventilateur de transport (84) disposé dans la conduite de recirculation (82) pour régler le débit volumique de la partie de l'air de séchage évacué à recirculer; et/ou
au moins une unité de vanne disposée dans la conduite de recirculation (82) pour réguler la partie du débit volumique de la partie de l'air de séchage évacué à recirculer qui doit être amenée à la chambre de combustion (12) et/ou au moufle (11) du brûleur (10).

6. Installation de séchage (100) selon l'une des revendications 1 à 5, dans laquelle le dispositif (80) est en outre configuré pour recirculer une première partie de l'air de séchage évacué vers le brûleur (10) et une deuxième partie de l'air de séchage évacué vers une chambre de mélange (30), dans laquelle la chambre de mélange (30) est configurée pour mélanger le gaz de séchage fourni par le brûleur (10) avec la partie de l'air de séchage évacué recirculée par le dispositif (80) et pour le fournir à la chambre de séchage (22).

7. Installation (1) pour la fabrication d'OSB, comprenant :
un dispositif (2a, 2b) pour la fabrication de copeaux OSB ;
l'installation de séchage (100) selon l'une des revendications 1 à 6 pour le séchage des copeaux OSB ;
un dispositif (4a, 4b) pour encoller les copeaux OSB séchés ;
un dispositif (5) pour la stratification orientée des copeaux OSB encollés en plusieurs couches ; et
un dispositif de pressage (6) pour presser les couches en un OSB.

8. Procédé pour réduire les polluants qui se forment lors du séchage des copeaux OSB dans une installation de séchage de copeaux OSB (100) selon l'une des revendications 1 à 6, dans lequel le procédé comprend :
la recirculation d'au moins une partie de l'air de séchage évacué généré lors du séchage des copeaux OSB vers le brûleur (10) de l'installation de séchage (100), ladite au moins une partie de l'air de séchage évacué étant recirculée directement vers le brûleur (10) par l'intermédiaire de la conduite de recirculation de l'installation de séchage (100) ;
le maintien de la partie de l'air de séchage évacué à recirculer vers le brûleur (10) à une température supérieure à la température de condensation de la vapeur d'eau contenue dans la partie de l'air de séchage évacué ; et
la combustion des polluants contenus dans la partie recirculée de l'air de séchage évacué dans le brûleur (10).

9. Procédé selon la revendication 8, dans lequel la température de la partie recirculée de l'air de séchage évacué est maintenue à tout moment au-dessus de la température de condensation pendant la recirculation.

10. Procédé selon la revendication 8 ou 9, dans lequel la température de la partie de l'air de séchage évacué à recirculer est maintenue à au moins 100 °C, de préférence à une température comprise entre 100 °C et 135 °C, et de manière encore plus préférée à une température comprise entre 115 °C et 125 °C.

11. Procédé selon l'une des revendications 8 à 10, dans lequel l'étape consistant à maintenir la température au-dessus de la température de condensation comprend un préchauffage facultatif de la conduite de recirculation (82) prévue pour la recirculation de l'air de séchage évacué et, en option, dans lequel le préchauffage comprend l'introduction d'air de préchauffage dans la conduite de recirculation (82).

12. Procédé selon l'une des revendications 8 à 11, dans lequel l'étape de recirculation comprend la recirculation d'une première partie de l'air de séchage évacué vers le brûleur (10), en particulier vers la chambre de combustion (12) et/ou vers le moufle du brûleur (11), et d'une deuxième partie de l'air de séchage évacué vers une chambre de mélange (30).

13. Procédé selon la revendication 12, dans lequel l'étape de recirculation comprend le contrôle du débit volumique de la première partie de l'air de séchage évacué recirculée vers le brûleur (10) et de la deuxième partie de l'air de séchage évacué recirculée vers la chambre de mélange (30).

14. Procédé selon l'une des revendications 8 à 13, dans lequel l'étape de combustion comprend la combustion des polluants contenus dans la partie recirculée de l'air de séchage évacué à des températures comprises entre 750 °C et 1200 °C.
